# EUROPEAN PATENT APPLICATION

(11) **EP 4 657 696 A1**
(43) Date of publication of application: **03.12.2025**
(21) Application number: 25179572.0
(22) Date of filing: 28.05.2025
(51) Int. Cl.: H02J 3/32, H02J 3/38, H02J 9/06

(54) **POWER CONVERTER, POWER SYSTEM, AND METHOD FOR CONTROLLING POWER CONVERTER**

(30) Priority: 29.05.2024 CN 202410684021
(71) Applicant: Sungrow (Shanghai) Co., Ltd, Shanghai 201203 (CN)
(72) Inventor: XU, Jincheng, Shanghai (CN); JIANG, Anying, Shanghai (CN); YU, Yanfei, Shanghai (CN)
(74) Representative: Zacco Norway AS

(57) **Abstract**

A power converter, a power system, and a method for controlling the power converter are provided. The power converter includes a DC voltage conversion circuit, a DC-AC voltage conversion circuit connected to the DC voltage conversion circuit, a switching circuit and a controller communicatively connected to the DC voltage conversion circuit, the DC-AC voltage conversion circuit and the switching circuit. The DC voltage conversion circuit is configured for converting DC power outputted by a DC power supply to output converted DC power to the DC-AC voltage conversion circuit. The controller is configured for, when operation of the power grid is abnormal: controlling the switching circuit to disconnect the DC-AC voltage conversion circuit electrically from a power grid and a load, stopping operation of the DC-AC voltage conversion circuit and keeping operation of the DC voltage conversion circuit.

## Description

### FIELD

The present disclosure relates to the technical field of electric power, and in particular to a power converter, a power system, and a method for controlling the power converter.

### BACKGROUND

With the development of a power system, a photovoltaic power generation system has emerged. In the photovoltaic power generation system, a power grid may supply power to user loads. Moreover, as a backup power supply, a photovoltaic energy storage inverter supplies power to the user loads in the event of abnormal power supply of the power grid.

In the conventional technology, the photovoltaic energy storage inverter of the photovoltaic power generation system operates in two typical modes: a grid-connected mode and an off-grid mode. The photovoltaic energy storage inverter operates in the grid-connected mode in a case of normal power grid. The photovoltaic energy storage inverter is switched to the off-grid mode in the event of abnormal power grid. Once the power grid returns to normal, the photovoltaic energy storage inverter is switched back to the grid-connected mode.

However, in the conventional photovoltaic power generation system, in the event of abnormal power grid, the photovoltaic energy storage inverter is on standby and is switched to the off-grid mode. Consequently, the photovoltaic energy storage inverter is required to be switched from the standby state to a startup state to achieve power supply. It takes some time to start the photovoltaic energy storage inverter. Therefore, the conventional photovoltaic power generation system suffers from the problem of slow power supply speed due to the photovoltaic energy storage inverter.

### SUMMARY

In view of the above technical problem, a power converter, a power system, and a method for controlling the power converter are provided, to improve a power supply speed of a photovoltaic energy storage inverter.

A power converter includes a direct current, DC, voltage conversion circuit, a direct current-alternating current, DC-AC, voltage conversion circuit, a switching circuit and a controller.

The DC voltage conversion circuit is connected to the DC-AC voltage conversion circuit, and is configured for connecting a DC power supply and converting DC power outputted by the DC power supply to output converted DC power to the DC-AC voltage conversion circuit. The DC-AC voltage conversion circuit is configured for converting the converted DC power into alternating current, AC, power.

The switching circuit is connected to the DC-AC voltage conversion circuit, and is configured for connecting a power grid and a load.

The controller is communicatively connected to the DC voltage conversion circuit, the DC-AC voltage conversion circuit and the switching circuit. The controller is configured for, when operation of the power grid is abnormal: controlling the switching circuit to disconnect the DC-AC voltage conversion circuit electrically from the power grid or from the load; stopping operation of the DC-AC voltage conversion circuit; and keeping operation of the DC voltage conversion circuit.

In an embodiment, the controller is further configured for, in response to the power grid stopping outputting power: controlling the switching circuit to connect the DC-AC voltage conversion circuit to the load; disconnecting the power grid electrically from the load; and keeping normal operation of the DC-AC voltage conversion circuit.

In an embodiment, the switching circuit includes a first switch and a second switch.

A first terminal of the first switch is connected to the DC-AC voltage conversion circuit, a second terminal of the first switch is connected to a first terminal of the second switch and the load, and a second terminal of the second switch is connected to the power grid. The controller is configured for turning off the first switch when the operation of the power grid is abnormal.

In an embodiment, the switching circuit further includes a third switch. A first terminal of the third switch is connected to the first terminal of the first switch, and a second terminal of the third switch is connected to the second terminal of the second switch. The controller is configured for turning off the first switch and the third switch when the operation of the power grid is abnormal.

In an embodiment, the power converter includes a first interface, a third interface and a fourth interface. The DC voltage conversion circuit is connected to the DC power supply through the first interface. A first terminal of the switching circuit is connected to the power grid through the third interface, and a second terminal of the switching circuit is connected to the load through the fourth interface.

In an embodiment, the DC power supply includes a photovoltaic power supply, and the DC voltage conversion circuit is connected to the photovoltaic power supply through the first interface.

In an embodiment, the DC power supply includes an energy storage battery, and the DC voltage conversion circuit is connected to the energy storage battery through the first interface.

In an embodiment, the power converter further includes a second interface, the DC power supply includes a photovoltaic power supply and an energy storage battery, a first terminal of the DC voltage conversion circuit is connected to the photovoltaic power supply through the first interface, and a second terminal of the DC voltage conversion circuit is connected to the energy storage battery through the second interface.

In an embodiment, the DC voltage conversion circuit includes at least one of a first conversion circuit or a second conversion circuit.

The DC power supply includes a photovoltaic power supply, a first terminal of the first conversion circuit is configured for connecting the photovoltaic power supply, a second terminal of the first conversion circuit is connected to the DC-AC voltage conversion circuit, and the first conversion circuit is configured for converting first DC power supplied by the photovoltaic power supply into second DC power and outputting the second DC power to the DC-AC voltage conversion circuit.

In an embodiment, the DC power supply includes an energy storage battery, a first terminal of the second conversion circuit is configured for connecting the energy storage battery, a second terminal of the second conversion circuit is connected to the DC-AC voltage conversion circuit, and the second conversion circuit is configured for converting third DC power into fourth DC power and outputting the fourth DC power to the energy storage battery, and converting fifth DC power supplied by the energy storage battery into sixth DC power and outputting the sixth DC power to the DC-AC voltage conversion circuit.

In an embodiment, the DC power supply includes a photovoltaic power supply and an energy storage battery, a first terminal of the first conversion circuit is configured for connecting the photovoltaic power supply, a second terminal of the first conversion circuit is connected to the DC-AC voltage conversion circuit, and the first conversion circuit is configured for converting first DC power supplied by the photovoltaic power supply into second DC power and outputting the second DC power to the DC-AC voltage conversion circuit; a first terminal of the second conversion circuit is connected to the second terminal of the first conversion circuit and the DC-AC voltage conversion circuit, and a second terminal of the second conversion circuit is configured for connecting the energy storage battery.

In an embodiment, the DC voltage conversion circuit includes the second conversion circuit, where the DC-AC voltage conversion circuit is configured for converting the sixth DC power into first AC power and outputting the first AC power to the load, and converting second AC power received from the power grid into seventh DC power and outputting the seventh DC power to the second conversion circuit.

A power system includes the aforementioned power converter.

In an embodiment, the DC power supply includes at least one of a photovoltaic power supply or an energy storage battery.

A method for controlling the aforementioned power converter includes: determining whether the power grid is abnormal; and in response to operation of the power grid being abnormal, controlling the switching circuit to disconnect the DC-AC voltage conversion circuit electrically from the power grid and the load; stopping operation of the DC-AC voltage conversion circuit; and keeping operation of the DC voltage conversion circuit.

According to the power converter, the power system, and the method for controlling the power converter described above, the DC voltage conversion circuit may perform conversion on DC power. The DC-AC voltage conversion circuit is connected to the power grid and the load through the switching circuit, and is configured for performing conversion between AC power and DC power. That is, the DC-AC voltage conversion circuit may convert the DC power supplied by the DC voltage conversion circuit into AC power, and output the AC power to the load. Further, the DC-AC voltage conversion circuit may convert AC power supplied by the power grid into DC power, and output the DC power to the DC voltage conversion circuit. At least two of the DC-AC voltage conversion circuit, the power grid and the load are selectively connected to or disconnected from each other through the switching circuit 30, thereby flexibly select a connection relationship, which is convenient for the power converter to operate in the off-grid mode or the grid-connected mode. The controller is configured for, in response to operation of the power grid being abnormal: controlling the switching circuit to disconnect the DC-AC voltage conversion circuit electrically from the power grid or from the load, stopping operation of the DC-AC voltage conversion circuit, and keeping operation of the DC voltage conversion circuit. Therefore, on the one hand, the DC voltage conversion circuit remains in operation, maintaining the charging of the energy storage battery even when the DC-AC voltage conversion circuit stops outputting power to the load. On the other hand, in a case that the DC-AC voltage conversion circuit 20 is required to supply power, the DC voltage conversion circuit remains in operation at all times, so that the DC-AC voltage conversion circuit upon startup can be rapidly powered by the DC voltage conversion circuit, thereby improving the power supply speed.

### BRIEF DESCRIPTION OF THE DRAWINGS

In order to illustrate the embodiments of the present disclosure or technical solutions in the conventional technology more clearly, drawings to be used in the description of the embodiments or the conventional technology are introduced simply hereinafter. It is apparent that the drawings described below only illustrate some embodiments of the present disclosure. For those skilled in the art, other drawings may be obtained according to these drawings without any creative work.
FIG. 1 is a schematic structural diagram of a power converter according to an embodiment of the present disclosure.
FIG. 1a is a schematic structural diagram of a power converter where a DC power supply includes a photovoltaic power supply according to an embodiment of the present disclosure.
FIG. 1b is a schematic structural diagram of a power converter where a DC power supply includes an energy storage battery according to an embodiment of the present disclosure.
FIG. 1c is a schematic structural diagram of a power converter where a DC power supply includes a photovoltaic power supply and an energy storage battery according to an embodiment of the present disclosure.
FIG. 2 is a schematic structural diagram of a power converter according to another embodiment of the present disclosure.
FIG. 3 is a schematic structural diagram of a power converter according to another embodiment of the present disclosure.
FIG. 4 is a schematic structural diagram of a power converter according to another embodiment of the present disclosure.
FIG. 4a is a schematic structural diagram of a power converter where a DC power supply includes a photovoltaic power supply according to another embodiment of the present disclosure.
FIG. 4b is a schematic structural diagram of a power converter where a DC power supply includes an energy storage battery according to another embodiment of the present disclosure.
FIG. 4c is a schematic structural diagram of a power converter where a DC power supply includes a photovoltaic power supply and an energy storage battery according to another embodiment of the present disclosure.
FIG. 5 is a schematic structural diagram of a power converter according to another embodiment of the present disclosure.
FIG. 6 is a schematic structural diagram of a power converter according to another embodiment of the present disclosure.
FIG. 7 is a schematic structural diagram of a power converter according to another embodiment;
FIG. 7a is a schematic structural diagram of a power converter according to another embodiment of the present disclosure.
FIG. 7b is a schematic structural diagram of a power converter according to another embodiment of the present disclosure.
FIG. 8 is a schematic structural diagram of a power system according to an embodiment of the present disclosure.
FIG. 9 is a flowchart of a method for controlling a power converter according to an embodiment.

Reference numerals are described as follows:

| | | | |
|---|---|---|---|
| 10 | DC voltage conversion circuit; | 20 | DC-AC voltage conversion circuit; |
| 30 | switching circuit; | 400 | DC power supply; |
| 40 | photovoltaic power supply; | 50 | energy storage battery; |
| 60 | power grid; | 70 | load; |
| 80 | controller; | K1 | first switch; |
| K2 | second switch; | K3 | third switch; |
| 100 | power converter; | 101 | first interface; |
| 102 | second interface; | 103 | third interface; |
| 104 | fourth interface; | 81 | first voltage sampler; |
| 82 | second voltage sampler; | 11 | first conversion circuit; |
| 12 | second conversion circuit. | | |

### DETAILED DESCRIPTION OF EMBODIMENTS

In order to facilitate the understanding of the present disclosure, the present disclosure will be described more thoroughly with reference to the relevant drawings below. Embodiments of the present disclosure are shown in the drawings. However, the present disclosure may be implemented in various forms and is not limited to the embodiments described herein. Rather, these embodiments are provided to make the present disclosure more thorough and comprehensive.

Unless otherwise defined, meanings of all technical and scientific terms used in this specification are the same as those usually understood by those skilled in the art of the present disclosure. The terminology used herein in the description of the present disclosure is only for the purpose of describing specific embodiments, which is not intended to limit the present disclosure.

It may be understood that the terms "first", "second" and the like used in the present disclosure may be used for describing various elements in this specification. However, the elements are not limited by the terms. The terms are merely used to distinguish a first element from another element.

It is to be noted that, an element being "connected" to another element may indicate that the element is directly connected to the other element, or the element is connected to the other element through an intermediate element. In addition, "connection" in the following embodiments should be understood as "electrical connection" and "communication connection" if there is transmission of electrical signals or data between connected objects.

As used herein, singular forms of "a", "an" and "the" may also include plural forms, unless clearly indicated otherwise in the context. It should also be understood that the terms such as "including/comprising" or "having" specify the presence of stated features, integers, steps, operations, components, parts or combinations thereof, but do not exclude the possibility of the presence or addition of one or more other features, integers, steps, operations, components, parts or combinations thereof.

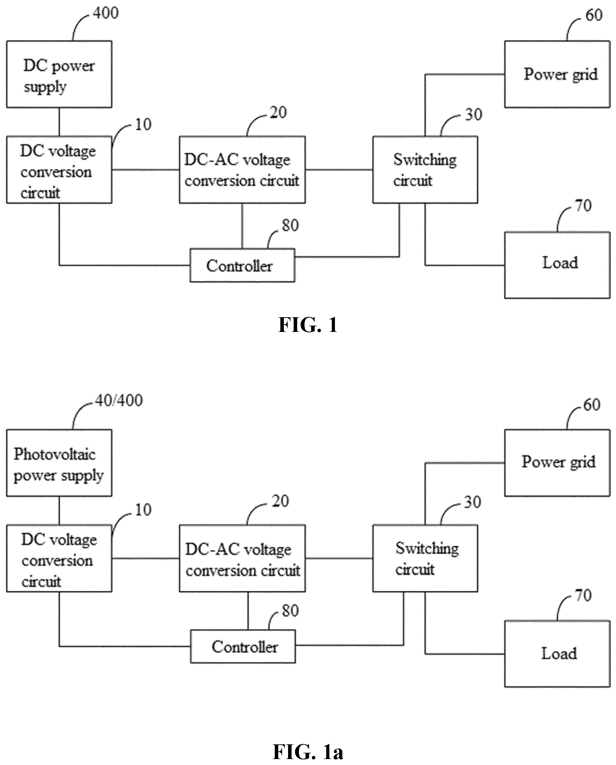

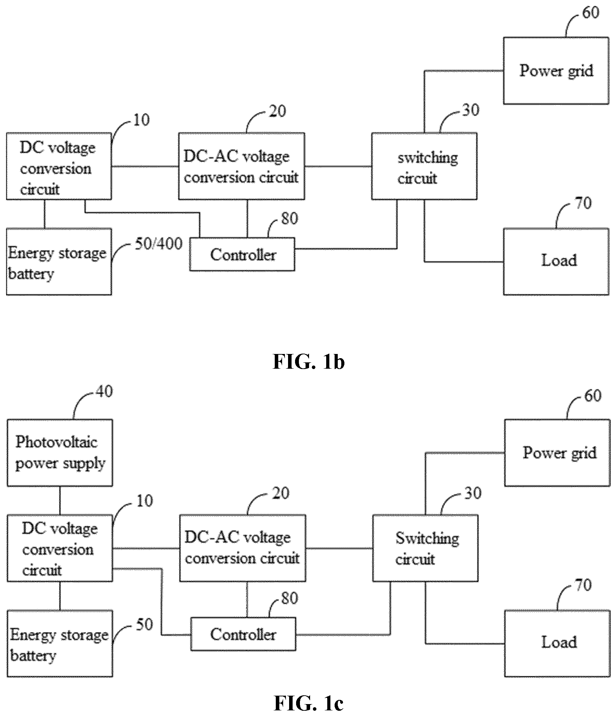

In an embodiment, as shown in FIG. 1, a power converter is provided, which includes a DC voltage conversion circuit 10, a DC-AC voltage conversion circuit 20, a switching circuit 30 and a controller 80.

The DC voltage conversion circuit 10 is connected to the DC-AC voltage conversion circuit 20, and is configured for connecting a DC power supply 400, and converting DC power outputted by the DC power supply 400 to output converted DC power to the DC-AC voltage conversion circuit 20.

Referring to FIG. 1a, FIG. 1b and FIG. 1c, the DC power supply 400 may include at least one of a photovoltaic power supply 40 or an energy storage battery 50. Referring to FIG. 1a, the DC power supply 400 includes the photovoltaic power supply 40, the DC voltage conversion circuit 10 may convert DC power supplied by the photovoltaic power supply 40 to output converted DC power. Referring to FIG. 1b, the DC power supply 400 includes the energy storage battery 50, the DC voltage conversion circuit 10 may convert DC power supplied by the energy storage battery 50 to output converted DC power, and may also convert DC power outputted by the DC-AC voltage conversion circuit 20 into specific DC power to charge the energy storage battery 50. Further, taking FIG. 1c as an example, the DC power supply 400 includes the photovoltaic power supply 40 and the energy storage battery 50. The DC voltage conversion circuit 10 may convert first DC power supplied by the external photovoltaic power supply 40 into second DC power and output the second DC power to the external energy storage battery 50 to charge the external energy storage battery 50. Further, the DC voltage conversion circuit 10 converts the first DC power supplied by the external photovoltaic power supply 40 into third DC power and outputs the third DC power to the DC-AC voltage conversion circuit 20, and the DC-AC voltage conversion circuit 20 supplies power to a load 70. Further, the DC voltage conversion circuit 10 may also convert power stored in the external energy storage battery 50 into third DC power and output the third DC power to the DC-AC voltage conversion circuit 20, and the DC-AC voltage conversion circuit 20 supplies power to the load 70.

The DC voltage conversion circuit 10 may include a bidirectional direct current-direct current (DC-DC) voltage converter.

The DC-AC voltage conversion circuit 20 is connected to a power grid 60 and the load 70 through the switching circuit 30.

The DC-AC voltage conversion circuit 20 may convert third DC power supplied by the DC voltage conversion circuit 10 into first AC power and output the first AC power through the switching circuit 30. Further, the DC-AC voltage conversion circuit 20 may convert first AC power supplied by the power grid 60 into third DC power and output the third DC power to the DC voltage conversion circuit 10.

The DC-AC voltage conversion circuit 20 may include a bidirectional DC-AC voltage converter.

The switching circuit 30 is connected to the DC-AC voltage conversion circuit 20, the power grid 60 and the load 70.

The switching circuit 30 may selectively connect the DC-AC voltage conversion circuit 20 to the power grid 60 or disconnect the DC-AC voltage conversion circuit 20 electrically from the power grid 60, thus switching between an off-grid mode and a grid-connected mode of the power converter.

The controller 80 is connected to the DC voltage conversion circuit 10, the DC-AC voltage conversion circuit 20 and the switching circuit 30, and is configured for, in response to operation of the power grid 60 being abnormal: controlling the switching circuit 30 to disconnect the DC-AC voltage conversion circuit 20 electrically from the power grid 60 or from the load 70, stopping operation of the DC-AC voltage conversion circuit 20 and keeping operation of the DC voltage conversion circuit 10.

The DC-AC voltage conversion circuit 20 is electrically disconnected from the power grid 60 or from the load 70 in response to operation of the power grid 60 being abnormal. In a case that the DC-AC voltage conversion circuit 20 is disconnected from the power grid 60 and the load 70, the DC-AC voltage conversion circuit 20 stops operating, while the DC voltage conversion circuit 10 remains in operation. The power grid 60 may be abnormal due to over-voltage, over-frequency or under-frequency conditions. In this case, it is determined that the power converter fails to meet a grid-connected condition, and the DC-AC voltage conversion circuit 20 is electrically disconnected from the power grid 60, thus protecting the power converter, for example, preventing the energy storage battery 50 from overcharging or experiencing frequent switching between charging and discharging states. However, in this case, although the power converter fails to meet the grid-connected condition, the power grid 60 may continue to supply power to the load 70, and thus the power grid 60 is connected to the load 70.

In a case that the power grid 60 is powered off, that is, in a case that no power is outputted from the power grid 60, the power converter supplies power to the load 70, and the DC-AC voltage conversion circuit 20 is started. Since the DC voltage conversion circuit 10 remains in operation at all times without restart, the DC-AC voltage conversion circuit 20 upon startup is rapidly powered by the DC voltage conversion circuit 10, thereby rapidly supplying power to the load 70, and improving the power supply speed.

In the embodiment, the DC voltage conversion circuit 10 may perform conversion on DC power. The DC-AC voltage conversion circuit 20 is connected to the power grid 60 and the load 70 through the switching circuit 30, and is configured for performing conversion between AC power and DC power. That is, the DC-AC voltage conversion circuit 20 may convert the DC power supplied by the DC voltage conversion circuit 10 into the AC power, and output the AC power to the load 70. Further, the DC-AC voltage conversion circuit 20 may convert AC power supplied by the power grid 60 into DC power, and output the DC power to the DC voltage conversion circuit 10 to charge the energy storage battery 50. At least two of the DC-AC voltage conversion circuit 20, the power grid 60 and the load 70 are selectively connected to or disconnected from each other through the switching circuit 30, thereby flexibly select a connection relationship, which is convenient for the power converter to operate in the off-grid mode or the grid-connected mode. The controller 80 is configured for, in response to operation of the power grid being abnormal: controlling the switching circuit to disconnect the DC-AC voltage conversion circuit electrically from the power grid or from the load, stopping operation of the DC-AC voltage conversion circuit and keeping operation of the DC voltage conversion circuit. Therefore, on the one hand, the DC voltage conversion circuit 10 remains in operation, maintaining the charging of the energy storage battery 50 even when the DC-AC voltage conversion circuit 20 stops outputting power to the load 70. On the other hand, in a case that the DC-AC voltage conversion circuit 20 is required to supply power, the DC voltage conversion circuit 10 remains in operation at all times without restart, so that the DC-AC voltage conversion circuit 20 upon startup can be rapidly powered by the DC voltage conversion circuit 10, thereby improving the power supply speed.

In an embodiment, referring to FIG. 1, the controller 80 is further configured for, in response to operation of the power grid 60 being abnormal: controlling the switching circuit 30 to connect the DC-AC voltage conversion circuit 20 electrically to the load 70, disconnecting the power grid 60 electrically from the load 70, and keeping normal operation of the DC-AC voltage conversion circuit 20.

In the embodiment, in response to the power grid 60 stopping outputting power (that is, the power grid 60 is powered off), the controller 80 may control the switching circuit 30 to connect the DC-AC voltage conversion circuit 20 electrically to the load 70, and keep normal operation of the DC-AC voltage conversion circuit 20. As a result, the DC-AC voltage conversion circuit 20 is able to supply power to the load 70, ensuring continuous power supply to the load 70 even when the power grid 60 is powered off.

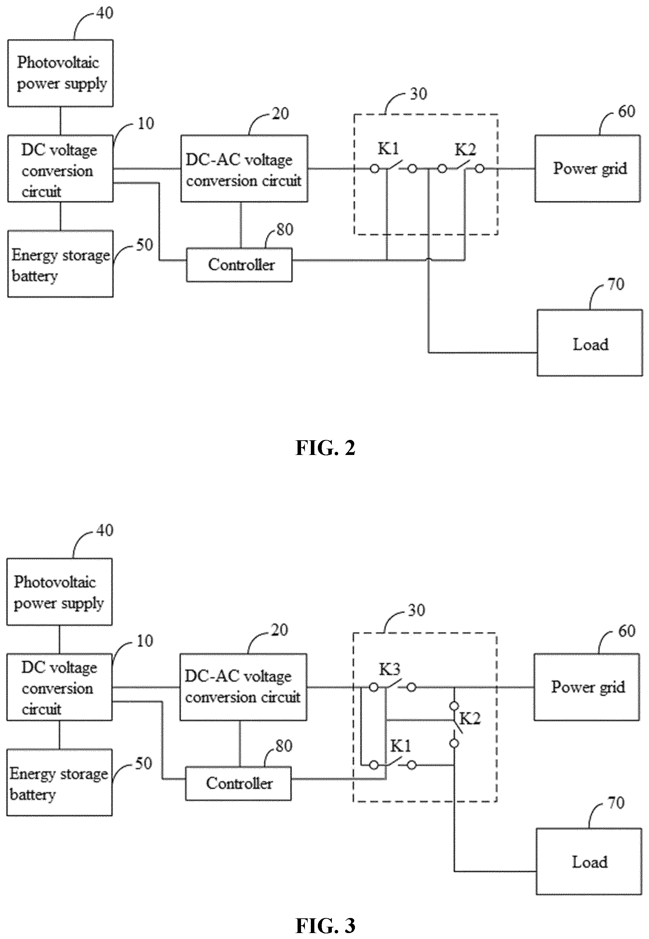

In an embodiment, as shown in FIG. 2, the switching circuit 30 includes a first switch K1 and a second switch K2.

A first terminal of the first switch K1 is connected to the DC-AC voltage conversion circuit 20, a second terminal of the first switch K1 is connected to a first terminal of the second switch K2 and the load 70, and a second terminal of the second switch K2 is connected to the power grid 60.

The controller 80 is configured for turning off the first switch K1 in response to the operation of the power grid 60 being abnormal.

In a case that the first switch K1 is turned off, the DC-AC voltage conversion circuit 20 stops operating, and the DC voltage conversion circuit 10 remains in operation.

The first switch K1 and the second switch K2 may be implemented by one relay or a combination of multiple relays, as long as they can achieve the effect of on or off.

The first switch K1 is turned off in the case that the power grid 60 is abnormal. That is, in a case that the power grid 60 is under the over-voltage, over-frequency or under-frequency conditions, or any other condition where the power grid 60 fails to meet the grid-connected condition, the first switch K1 is turned off, disconnecting the power converter from the power grid. Simultaneously, the second switch K2 is turned on, allowing the power grid 60 to continue supplying power to the load 70. The DC-AC voltage conversion circuit 20 stops operating, while the DC voltage conversion circuit 10 remains in operation. In a case that the power grid 60 is abnormally powered off, the second switch K2 is turned off, disconnecting the power grid 60 from the load 70. In such case, the first switch K1 is always on, the DC-AC voltage conversion circuit 20 is started, and the power converter operates in the off-grid mode to supply power to the load 70, thus maintaining the power demand of the load 70.

In the embodiment, the switching circuit 30 includes the first switch K1 and the second switch K2, so as to flexibly switch between the power grid 60 and the energy storage inverter to supply power to the load 70, thus ensuring the power demand of the load 70.

In an embodiment, as shown in FIG. 3, the switching circuit 30 further includes a third switch K3.

A first terminal of the third switch K3 is connected to the first terminal of the first switch K1. A second terminal of the third switch K3 is connected to the second terminal of the second switch K2.

The controller 80 is configured for turning off the first switch K1 and the third switch K3 in response to the operation of the power grid 60 being abnormal.

The third switch K3 and the first switch K1 are turned off in the case that the power grid 60 is abnormal. In a case that the third switch K3 and the first switch K1 are turned off, the DC-AC voltage conversion circuit 20 stops operating, while the DC voltage conversion circuit 10 remains in operation.

In a case that the power grid 60 is under the over-voltage, over-frequency or under-frequency conditions, or any other condition where the power grid 60 fails to meet the grid-connected condition, the third switch K3 and the first switch K1 are turned off, disconnecting the power converter from the power grid and preventing the power converter from supplying power. Simultaneously, the second switch K2 remains in on, allowing the power grid 60 to continue supplying power to the load 70. The DC-AC voltage conversion circuit 20 stops operating, while the DC voltage conversion circuit 10 remains in operation. In a case that the power grid 60 is abnormally powered off, the second switch K2 is turned off, disconnecting the power grid 60 from the load 70. Simultaneously, the first switch K1 is turned on, the DC-AC voltage conversion circuit 20 is started, and the power converter operates in the off-grid mode to supply power to the load 70, thus maintaining the power demand of the load 70. Alternatively, the third switch K3 is turned on, the first switch K1 is turned off, and the second switch K2 is turned off. In this case, the power grid 60 is connected to the power converter, but neither the power grid 60 nor the power converter is connected to the load 70.

In a case that the third switch K3 is turned on, the second switch K2 is turned on, and the first switch K1 is turned off, the power converter operates in the grid-connected mode. In a case that the third switch K3 is turned on, the first switch K1 is turned on, and the second switch K2 is turned off, the power converter operates in the grid-connected mode. In a case that the third switch K3 is turned off, the first switch K1 is turned off, and the second switch K2 is turned on, the power converter operates in the off-grid mode and only the power grid 60 supplies power to the load 70. In a case that the third switch K3 is turned off, the first switch K1 is turned on, and the second switch K2 is turned off, the power converter operates in the off-grid mode and only the power converter supplies power to the load 70. In a case that the third switch K3 is turned on, the first switch K1 is turned off, and the second switch K2 is turned off, the power converter operates in the grid-connected mode and does not supply power to the load 70.

In the case that the third switch K3 is turned on, the first switch K1 is turned off, and the second switch K2 is turned off, the power converter operates in the grid-connected mode and does not supply power to the load 70. In such case, an interface used by the power converter to connect to the load 70 is not energized, and thus the insulation and electrostatic protection requirements for this Emergency Power Supply (EPS) interface may be lower as compared with the previous embodiment.

The power converter is internally provided with the controller. The controller is configured for controlling an on-off status of each switch and an operational status of each circuit.

In the embodiment, the third switch K3, the first switch K1 and the second switch K2 can flexibly switch connection states between the power converter, the power grid 60 and the load 70, so that the power converter can rapidly switch between the grid-connected operation mode and the off-grid operation mode, and switch the power supply for supplying power to the load 70.

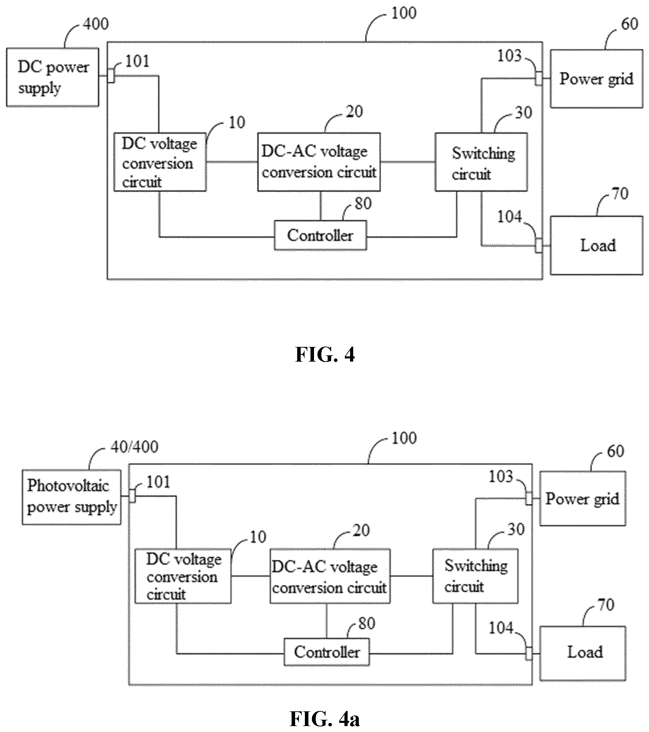

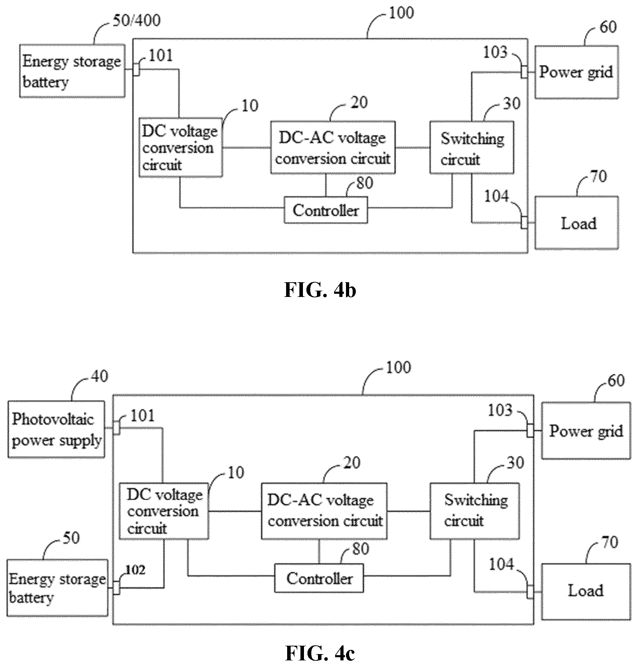

In an embodiment, as shown in FIG. 4, the power converter 100 includes a first interface 101, a third interface 103 and a fourth interface 104.

The DC voltage conversion circuit 10 is connected to the DC power supply 400 through the first interface 101.

A first terminal of the switching circuit 30 is connected to the power grid 60 through the third interface 103, and a second terminal of the switching circuit 30 is connected to the load 70 through the fourth interface 104.

The DC power supply 400 includes at least one of a photovoltaic power supply 40 and an energy storage battery 50. In an embodiment, as shown in FIG. 4a, the DC power supply includes the photovoltaic power supply 40, and the DC voltage conversion circuit 10 is connected to the photovoltaic power supply 40 through the first interface. As shown in FIG. 4b, the DC power supply includes the energy storage battery 50, and the DC voltage conversion circuit 10 is connected to the energy storage battery 50 through the first interface. As shown in FIG. 4c, the power converter 100 further includes a second interface 102, and the DC power supply 400 includes the photovoltaic power supply 40 and the energy storage battery 50. A first terminal of the DC voltage conversion circuit 10 is connected to the external photovoltaic power supply 40 through the first interface 101, and a second terminal of the DC voltage conversion circuit 10 is connected to the external energy storage battery 50 through the second interface 102.

In the embodiment, the power converter 100 according to the present disclosure includes the first interface 101, the third interface 103 and the fourth interface 104, which is convenient for connection of the DC power supply 400 (including at least one of the external photovoltaic power supply 40 and the external energy storage battery 50), the power grid 60 and the load 70.

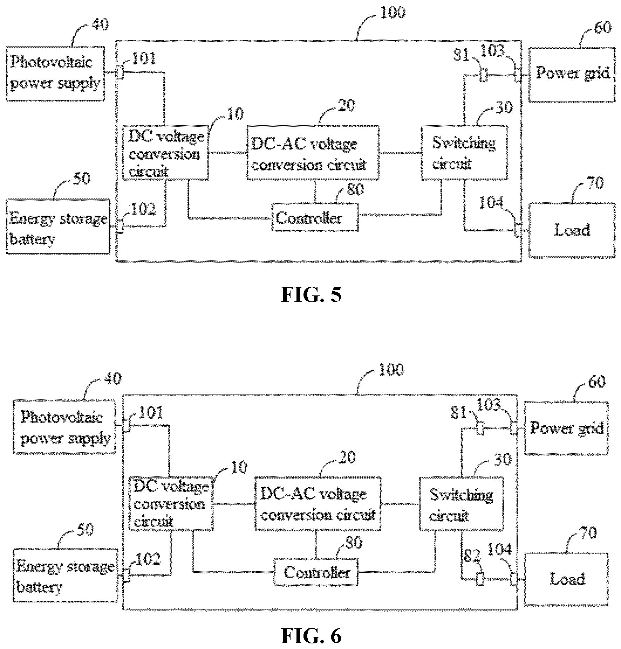

In an embodiment, as shown in FIG. 5, the power converter 100 further includes a first voltage sampler 81. The first voltage sampler 81 is connected between the first terminal of the switching circuit 30 and the power grid 60, and is configured for sampling an AC voltage inputted from the power grid 60.

The controller 80 is connected to the first voltage sampler 81 (a connection line is not shown) and acquires the AC voltage outputted from the power grid 60.

In the embodiment, the first voltage sampler 81 is configured for sampling the AC voltage inputted from the power grid 60, thereby facilitating the controller 80 to determine whether the power grid 60 is under the over-voltage, over-frequency or under-frequency conditions as well as whether the power grid 60 is powered off based on the AC voltage inputted from the power grid 60.

In an embodiment, as shown in FIG. 6, the power converter 100 further includes a second voltage sampler 82. The second voltage sampler 82 is connected between the second terminal of the switching circuit 30 and the load 70, and is configured for sampling a DC voltage outputted from the power converter 100.

The controller 80 is connected to the second voltage sampler 82 (a connection line is not shown) and acquires the direct current voltage outputted from the power converter 100.

In the embodiment, the second voltage sampler 82 is configured for sampling the direct current voltage outputted from the power converter 100, thereby facilitating the controller 80 to determine whether the direct current voltage outputted from the power converter 100 is normal.

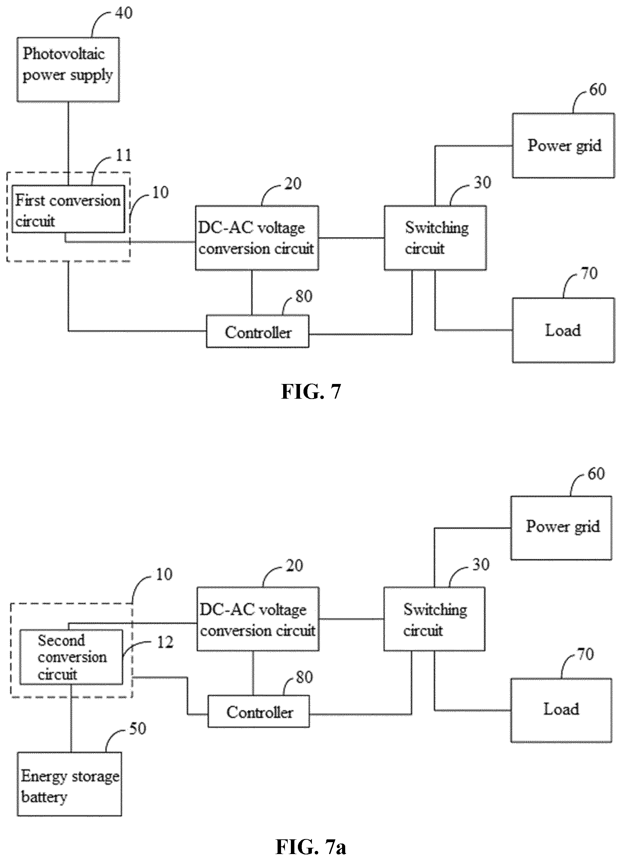

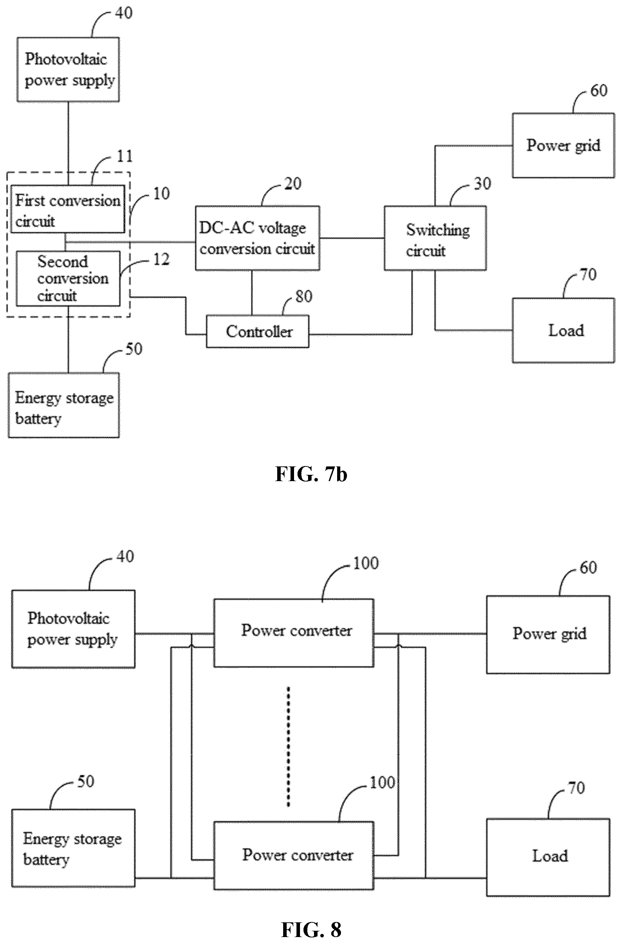

In an embodiment, as shown in FIG. 7, FIG. 7a and FIG. 7b, the DC voltage conversion circuit 10 includes at least one of a first conversion circuit 11 and a second conversion circuit 12.

As shown in FIG. 7, the DC power supply includes the photovoltaic power supply 40. A first terminal of the first conversion circuit 11 is configured for connecting the external photovoltaic power supply 40, a second terminal of the first conversion circuit 11 is connected to the DC-AC voltage conversion circuit 20. The first conversion circuit 11 is configured for converting first DC power supplied by the photovoltaic power supply 40 into second DC power and outputting the second DC power to the DC-AC voltage conversion circuit 20.

In an embodiment, as shown in FIG. 7a, the DC power supply includes the energy storage battery 50. A first terminal of the second conversion circuit 12 is configured for connecting the energy storage battery 50, and a second terminal of the second conversion circuit 12 is connected to the DC-AC voltage conversion circuit 20. The second conversion circuit 12 is configured for converting third DC power into fourth DC power and outputting the fourth DC power to the energy storage battery 50, and convert fifth DC power supplied by the energy storage battery 50 into sixth DC power and output the sixth DC power to the DC-AC voltage conversion circuit 20.

In an embodiment, as shown in FIG. 7b, the DC power supply includes the photovoltaic power supply 40 and the energy storage battery 50. A first terminal of the first conversion circuit 11 is configured for connecting the photovoltaic power supply 40, a first terminal of the second conversion circuit 12 is connected to the first conversion circuit 11 and the DC-AC voltage conversion circuit 20, and a second terminal of the second conversion circuit 12 is configured for connecting the external energy storage battery 50. The first conversion circuit 11 is configured for converting first DC power supplied by the photovoltaic power supply 40 into second DC power and output the second DC power to the DC-AC voltage conversion circuit 20. The second conversion circuit 12 is configured for converting third DC power into fourth DC power and outputting the fourth DC power to the energy storage battery 50, and converting fifth DC power supplied by the energy storage battery 50 into sixth DC power and outputting the sixth DC power to the DC-AC voltage conversion circuit 20.

The DC-AC voltage conversion circuit 20 is configured for converting the sixth DC power into first AC power and outputting the first AC power to the load 70, and converting second AC power received from the power grid 60 into seventh DC power and outputting the seventh DC power to the second conversion circuit 12.

In the embodiment, the first conversion circuit 11 may convert the first DC power supplied by the photovoltaic power supply 40 into the second DC power, thus facilitating the DC-AC voltage conversion circuit 20 to convert the sixth DC power into the first AC power for output. The second conversion circuit 12 may convert the third DC power into the fourth DC power to charge the energy storage battery 50.

In an embodiment, referring to FIG. 4, a power system is provided according to the present disclosure, and includes the power converter 100 according to any of the above embodiments.

In an embodiment, referring to FIG. 4a to FIG. 4c, the power system further includes the DC power supply 400. The power converter 100 is connected to the DC power supply 400, and is configured for connecting the power grid 60 and the load 70. The DC power supply 400 includes at least one of the photovoltaic power supply 40 and the energy storage battery 50.

In the embodiment, the power system including the power converter 100 according to any of the above embodiments is provided. Therefore, the power system has the beneficial effects of the power converter 100 according to the above embodiments, which is not repeated here.

In an embodiment, as shown in FIG. 8, the power system includes multiple power converters 100. The multiple power converters 100 are connected in parallel.

In the embodiment, the multiple power converters 100 in parallel can improve the power supply capacity.

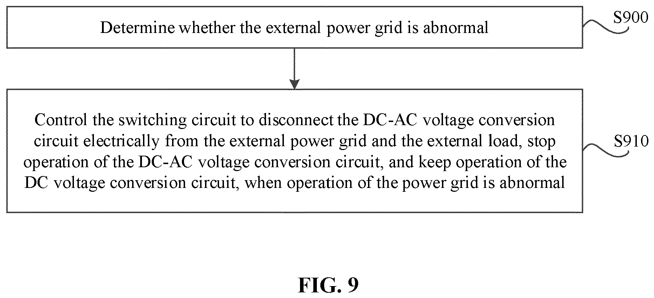

In an embodiment, as shown in FIG. 9, a method for controlling a power converter is provided, which is applied to the power converter according to any of the above embodiments. The method includes the following steps S900 to S910.

In step S900, it is determined whether the power grid is abnormal.

In step S910, in response to operation of the power grid being abnormal, the switching circuit is controlled to disconnect the DC-AC voltage conversion circuit electrically from the power grid or from the load, operation of the DC-AC voltage conversion circuit is stopped and operation of the DC voltage conversion circuit is kept.

In the embodiment, firstly, it is determined whether the power grid is abnormal. Then, in response to operation of the power grid being abnormal, the switching circuit is controlled to disconnect the DC-AC voltage conversion circuit electrically from the power grid or from the load, operation of the DC-AC voltage conversion circuit is stopped and operation of the DC voltage conversion circuit is kept. Therefore, on the one hand, the DC voltage conversion circuit remains in operation, maintaining the charging of the energy storage battery even when the DC-AC voltage conversion circuit stops outputting power to the load. On the other hand, in a case that the DC-AC voltage conversion circuit 20 is required to supply power, the DC voltage conversion circuit remains in operation at all times, so that the DC-AC voltage conversion circuit upon startup can be rapidly powered by the DC voltage conversion circuit, thereby improving the power supply speed.

In the description of this specification, descriptions referring to the terms "some embodiments", "other embodiments" and "ideal embodiments" mean that specific features, structures, materials or characteristics described in connection with the embodiment or example are included in at least one embodiment or example of the present disclosure. In this specification, schematic descriptions of the above terms do not necessarily refer to the same embodiment or example.

The technical features in the above embodiments may be randomly combined. For simplicity of description, not all possible combinations of the technical features in the above embodiments are described. However, the combinations of these technical features shall be considered as falling within the scope recorded by this specification provided that no conflict exists.

The above embodiments are only several implementations of the present disclosure. The embodiments are described specifically and in detail, but cannot be construed as a limitation to the protection scope of the present disclosure. It should be noted that, for those skilled in the art, some modifications and improvements can be made without departing from the concept of the present disclosure, these all fall within the protection scope of the present disclosure. Therefore, the protection scope of the present disclosure shall be determined by the claims.

## Claims

1. A power converter, **characterized in**:
a direct current, DC, voltage conversion circuit (10);
a direct current-alternating current, DC-AC, voltage conversion circuit (20);
a switching circuit (30);
a controller (80), wherein
the DC voltage conversion circuit (10) is connected to the DC-AC voltage conversion circuit (20), and is configured for connecting a DC power supply (400) and converting DC power outputted by the DC power supply (400) to output converted DC power to the DC-AC voltage conversion circuit (20);
the DC-AC voltage conversion circuit (20) is configured for converting the converted DC power into alternating current, AC, power;
the switching circuit (30) is connected to the DC-AC voltage conversion circuit (20), and is configured for connecting a power grid (60) and connecting a load (70); and
the controller (80) is communicatively connected to the DC voltage conversion circuit (10), the DC-AC voltage conversion circuit (20), and the switching circuit (30), wherein the controller (80) is configured for, when operation of the power grid (60) is abnormal:
controlling the switching circuit (30) to disconnect the DC-AC voltage conversion circuit (20) electrically from the power grid (60) or from the load (70);
stopping operation of the DC-AC voltage conversion circuit (20); and
keeping operation of the DC voltage conversion circuit (10).

2. The power converter according to claim 1, wherein the controller (80) is further configured for, in response to the power grid (60) stopping outputting power:
controlling the switching circuit (30) to connect the DC-AC voltage conversion circuit (20) electrically to the load (70);
disconnecting the power grid (60) electrically from the load (70); and
keeping normal operation of the DC-AC voltage conversion circuit (20).

3. The power converter according to claim 1 or 2, wherein the switching circuit (30) comprises a first switch (K1) and a second switch (K2), wherein
a first terminal of the first switch (K1) is connected to the DC-AC voltage conversion circuit (20), a second terminal of the first switch (K1) is connected to a first terminal of the second switch (K2) and connected to the load (70), and a second terminal of the second switch (K2) is connected to the power grid (60); and
the controller (80) is configured for turning off the first switch (K1) when the operation of the power grid (60) is abnormal.

4. The power converter according to claim 3, wherein the switching circuit (30) further comprises a third switch (K3), wherein
a first terminal of the third switch (K3) is connected to the first terminal of the first switch (K1), and a second terminal of the third switch (K3) is connected to the second terminal of the second switch (K2); and
the controller (80) is configured for turning off the first switch (K1) and the third switch(K3) when the operation of the power grid (60) is abnormal.

5. The power converter according to claim 1, comprising a first interface (101), a third interface (103) and a fourth interface (104), wherein
the DC voltage conversion circuit (10) is connected to the DC power supply (400) through the first interface (101); and
a first terminal of the switching circuit (30) is connected to the power grid (60) through the third interface (103), and a second terminal of the switching circuit (30) is connected to the load (70) through the fourth interface (104).

6. The power converter according to claim 5, wherein
the DC power supply (400) comprises a photovoltaic power supply (40), and the DC voltage conversion circuit (10) is connected to the photovoltaic power supply (40) through the first interface (101);
the DC power supply (400) comprises an energy storage battery (50), and the DC voltage conversion circuit (10) is connected to the energy storage battery (50) through the first interface (101); or
the power converter further comprises a second interface, the DC power supply (400) comprises a photovoltaic power supply (40) and an energy storage battery (50), a first terminal of the DC voltage conversion circuit (10) is connected to the photovoltaic power supply (40) through the first interface (101), and a second terminal of the DC voltage conversion circuit (10) is connected to the energy storage battery (50) through the second interface.

7. The power converter according to claim 1, wherein the DC voltage conversion circuit (10) comprises at least one of a first conversion circuit (11) or a second conversion circuit (12), wherein
the DC power supply (400) comprises a photovoltaic power supply (40), a first terminal of the first conversion circuit (11) is configured for connecting the photovoltaic power supply (40), a second terminal of the first conversion circuit (11) is connected to the DC-AC voltage conversion circuit (20), and the first conversion circuit (11) is configured for converting first DC power supplied by the photovoltaic power supply (40) into second DC power and outputting the second DC power to the DC-AC voltage conversion circuit (20);
the DC power supply (400) comprises an energy storage battery (50), a first terminal of the second conversion circuit (12) is configured for connecting the energy storage battery (50), a second terminal of the second conversion circuit (12) is connected to the DC-AC voltage conversion circuit (20), and the second conversion circuit (12) is configured for converting third DC power into fourth DC power and outputting the fourth DC power to the energy storage battery (50), and converting fifth DC power supplied by the energy storage battery (50) into sixth DC power and outputting the sixth DC power to the DC-AC voltage conversion circuit (20); or
the DC power supply (400) comprises a photovoltaic power supply (40) and an energy storage battery (50), a first terminal of the first conversion circuit (11) is configured for connecting the photovoltaic power supply (40), a second terminal of the first conversion circuit (11) is connected to the DC-AC voltage conversion circuit (20), and the first conversion circuit (11) is configured for converting first DC power supplied by the photovoltaic power supply (40) into second DC power and outputting the second DC power to the DC-AC voltage conversion circuit (20); a first terminal of the second conversion circuit (12) is connected to the second terminal of the first conversion circuit (11) and the DC-AC voltage conversion circuit (20), and a second terminal of the second conversion circuit (12) is configured for connecting the energy storage battery (50).

8. The power converter according to claim 7, wherein the DC voltage conversion circuit (10) comprises the second conversion circuit (12), wherein
the DC-AC voltage conversion circuit (20) is configured for converting the sixth DC power into first AC power and outputting the first AC power to the load (70), and converting second AC power received from the power grid (60) into seventh DC power and outputting the seventh DC power to the second conversion circuit (12).

9. A power system, comprising the power converter according to any one of claims 1 to 8.

10. The power system according to claim 9, further comprising the DC power supply (400), wherein
the DC power supply (400) comprises at least one of a photovoltaic power supply (40) or an energy storage battery (50).

11. A method for controlling the power converter according to any one of claims 1 to 8, comprising:
determining (S900) whether operation of the power grid (60) is abnormal; and
when operation of the power grid (60) is abnormal,
controlling (S910) the switching circuit (30) to disconnect the DC-AC voltage conversion circuit (20) electrically from the power grid (60) and the load (70);
stopping operation of the DC-AC voltage conversion circuit (20); and
keeping operation of the DC voltage conversion circuit (10).
